# EUROPÄISCHE PATENTSCHRIFT

(11) **EP 1 359 361 B1**
(45) Veröffentlichungstag und Bekanntmachung des Hinweises auf die Patenterteilung: **05.10.2005**
(21) Anmeldenummer: 02010003.8
(22) Anmeldetag: 04.05.2002
(51) Int. Cl.: F16L 37/088, F16L 37/084

(54) **Rohrkupplung für Rohrleitungen**
Pipe coupling
Raccord pour tuyaux

(43) Veröffentlichungstag der Anmeldung: 05.11.2003
(73) Patentinhaber: TI Automotive (Fuldabrück) GmbH, 34277 Fuldabrück (DE)
(72) Erfinder: Rohde, Reiner, Dipl.-Ing., 34323 Malsfeld (DE); Rose, Andreas, Dipl.-Ing., 34246 Vellmar (DE); Thomke, Torsten, Dipl.-Ing., 34225 Baunatal (DE); Szczepaniak, Andreas, Dipl.-Ing., 34253 Lohfelden (DE); Apel, Kurt, Dipl.-Ing., 36286 Neuenstein (DE)
(74) Vertreter: Rohmann, Michael

(56) Entgegenhaltungen:
- EP-A- 0 728 981
- US-A- 4 524 995
- US-A- 4 946 205
- US-A- 5 452 924
- US-A- 5 628 531
- US-A- 5 649 724

## Beschreibung

Die Erfindung betrifft eine Rohrkupplung für Rohrleitungen mit einem Gehäuse, das an zumindest einer Stirnseite eine Aufnahmekammer für die Aufnahme eines Rohrleitungsendes mit zumindest einem nach außen vorkragenden Rastvorsprung aufweist, wobei in der Aufnahmekammer zumindest ein die Aufnahmekammeröffnung verengendes Rastelement vorgesehen ist und wobei zwischen Rastelement und Aufnahmekammerwandung zumindest ein Freiraum vorgesehen ist, wobei das Rastelement beim Einstecken des Rohrleitungsendes in einen ersten Einsteckzustand überführbar ist, in dem das Rastelement von dem Rastvorsprung unter Aufweitung der Aufnahmekammeröffnung in den Freiraum gedrückt ist, wobei das Rastelement in einen zweiten endgültigen Einsteckzustand überführbar ist, in dem der Rastvorsprung das Rastelement hinterfasst und das Rastelement unter Freigabe des Freiraumes in seinen ursprünglichen, die Aufnahmekammeröffnung verengenden Zustand zurückgekehrt ist, wobei ein Verriegelungselement zur Kontrolle des Einsteckzustandes in zumindest einer Verriegelungsöffnung der Aufnahmekammerwandung vorgesehen ist und wobei das Verriegelungselement im ersten Einsteckzustand außerhalb des Freiraumes angeordnet ist.

Rohrleitung meint im Rahmen der Erfindung insbesondere eine Rohrleitung für ein flüssiges oder gasförmiges Medium, wobei die Rohrleitung vorzugsweise aus Kunststoff, Gummi oder Metall besteht. Rohrleitungsende meint an dieser Stelle und nachfolgend insbesondere ein Rohrleitungsende mit endseitigem Stecker, der in die Aufnahmekammer einsteckbar ist. Der Stecker kann dabei als separates Bauelement an dem Rohrleitungsende vorgesehen sein und an die Rohrleitung angeschlossen sein. Im Falle einer Rohrleitung aus Kunststoff kann der Stecker über ein geeignetes Profilelement, beispielsweise ein Tannenbaumprofil im Inneren der Rohrleitung fixiert sein. Der Stecker kann jedoch auch mit dem Ende der Rohrleitung aus Kunststoff stoffschlüssig verbunden sein, beispielsweise rotationsverschweißt sein. Im Falle einer Rohrleitung aus Gummi ist ein in die Rohrleitung eingeschobener Stecker zweckmäßigerweise zusätzlich mit einer Schelle fixiert. Wenn die Rohrleitung aus Metall besteht, ist die Steckergeometrie normalerweise an das Rohrleitungsende angeformt. Dann ist also der Stecker kein separates Bauteil.

Grundsätzlich kann die erfindungsgemäße Rohrkupplung an beiden Stirnseiten eine Aufnahmekammer für die Aufnahme des Rohrleitungsendes aufweisen. Es liegt aber auch im Rahmen der Erfindung, dass die Rohrkupplung an ihrer zweiten Stirnseite ein Kupplungsende aufweist, auf das eine Rohrleitung, insbesondere eine flexible Rohrleitung bzw. eine als Schlauchleitung ausgebildete Rohrleitung aufschiebbar ist. Dann ist zweckmäßigerweise ein außen gezacktes Dornprofil am Kupplungsende vorgesehen. Des Weiteren kann dieses Kupplungsende jedoch auch derart angeformt sein, dass es zum Beispiel mit einer Kunststoffleitung stoffschlüssig verbunden werden kann. Dann weist das Kupplungsende eine Ringnut zur Aufnahme der Rohrwandung auf, deren Breite sich in Richtung der Nuttiefe verjüngt.

Bei den aus der Praxis bekannten Rohrkupplungen wird das an die Rohrkupplung anzuschließende Rohrleitungsende einer Rohrleitung in der Regel in der Aufnahmekammer verrastet. Normalerweise ist in der Rohrkupplung bzw. in der Aufnahmekammer zumindest ein Dichtelement, insbesondere in Form eines Dichtungsringes, vorhanden, mit dem die Rastverbindung zwischen Rohrkupplung und Rohrleitungsende abgedichtet wird. Bei diesen aus der Praxis bekannten Rohrleitungen besteht das beachtliche Problem, dass von außen kein visuelles Prüfelement vorhanden ist, welches anzeigt, ob das Rohrleitungsende bzw. der Stecker in der Aufnahmekammer korrekt verrastet ist. Bei der Montage der Verbindung kann es unter Umständen vorkommen, dass das Rohrleitungsende bzw. der Stecker in die Aufnahmekammer der Rohrkupplung eingesteckt wird, ohne dass die Rastverbindung hergestellt wurde bzw. ohne dass die Rastverbindung korrekt hergestellt wurde.

Dabei kann es auch vorkommen, dass über die Verpressung des Dichtungselementes zwar bereits eine gewisse Abdichtung zwischen Rohrkupplung und Rohrleitungsende realisiert ist, dass die Rastverbindung aber nichtsdestoweniger nicht oder nicht richtig hergestellt wurde. Aufgrund der zumindest zunächst funktionierenden Abdichtung erkennt man diesen Mangel nicht sofort, wenn ein fluides Medium durch die Rohrleitung bzw. durch die Rohrkupplung fließt. Solche Verbindungstechniken werden unter anderem auch innerhalb des Kraftstoffsystems bzw. Luftdruckbremssystems eines Automobils eingesetzt. Sie stellen daher Sicherheitskomponenten dar, deren einwandfreie Funktion gewährleistet sein muss. Es ist deshalb erforderlich, dass eine nicht korrekt hergestellte Verbindung von außen unmittelbar erkennbar ist. Das ist aber bei den aus dem Stand der Technik bekannten Rohrkupplungen nicht immer ohne weiteres gewährleistet. Des Weiteren ist gerade bei Metallendanformungen an Rohrleitungsenden herstellungsbedingt eine genaue Ausführung der durch die Vorschriften geforderten Steckergeometrie nicht immer gewährleistet. Dies führt im ungünstigsten Fall dazu, dass ein das Rohrleitungsende bildender Metallstecker selbst im verrasteten Zustand mit geringerem Kraftaufwand (als gefordert) herausgezogen werden kann. Eine solche Verbindung entspricht somit nicht den Sicherheitsanforderungen .

Beim gattungsbildenden Stand der Technik nach der US-A 5 628 531 ist eine Klinke vorgesehen, die gelenkig an die Rohrkupplung angeschlossen ist und sich in eine verriegelte Stellung überführen lässt. Dabei hinterfasst ein Sperrarm einen Rastvorsprung des in die bekannte Rohrkupplung eingeschobenen Rohrleitungsendes. Zu diesem Zweck verfügt die Klinke über zwei Fangarme. Ein unbeabsichtigtes Lösen der Klinke kann nicht ausgeschlossen werden, zumal diese von außen her zugänglich ist. Die Probleme um die zuvor beschriebenen erhöhten Sicherheitsanforderungen vermag der skizzierte Stand der Technik folglich nicht zu lösen.

Demgegenüber liegt der Erfindung das technische Problem zugrunde, eine Rohrkupplung der eingangs genannten Art anzugeben, mit der eine feste und funktionssichere Verrastung von Rohrleitungsende und Rohrkupplung hergestellt werden kann und bei der vor allem problemlos erkennbar ist, dass diese Rastverbindung korrekt hergestellt wurde.

Zur Lösung dieses technischen Problems schlägt die Erfindung bei einer gattungsgemäßen Rohrkupplung vor, dass das Verriegelungselement im zweiten Einsteckzustand in den auf der einen Seite von dem Rastelement und auf der anderen gegenüberliegenden Seite von der Aufnahmekammerwandung begrenzten Freiraum einschiebbar ist, wobei sich das Verriegelungselement gleichzeitig mit dem Rastelement und der Aufnahmekammerwandung in Anlage befindet, so dass ein Verschieben des Rastelementes in den Freiraum aufgrund des den Freiraum blockierenden Verriegelungselementes verhindert wird und somit ein unbeabsichtigtes Lösen der Rastverbindung von Rohrkupplung und Rohrleitungsende verhindert wird.

Die in der Aufnahmekammer der Rohrkupplung einrastbare Rohrleitung ist vorzugsweise für ein fluides Medium vorgesehen. Die Rohrleitung dient beispielsweise der Durchleitung von Kraftstoffen, Bremsflüssigkeiten und dergleichen. Bei solchen Flüssigkeiten ist eine korrekte und dichte Verbindung besonders wichtig. - Das Gehäuse weist in Längsrichtung eine Durchgangsbohrung auf. Mit anderen Worten wird das Gehäuse in Längsrichtung von einer zentralen Durchgangsbohrung durchfasst. Die Aufnahmekammer ist Bestandteil der Durchgangsbohrung. An der zweiten Stirnseite des Gehäuses kann grundsätzlich ebenfalls eine Aufnahmekammer für die Aufnahme eines Rohrleitungsendes vorgesehen sein. Es liegt aber auch im Rahmen der Erfindung, dass an dem zweiten Stirnende ein Kupplungsende bzw. ein Profil vorgesehen ist, auf das beispielsweise eine Rohrleitung oder ein Schlauch aufgeschoben bzw. aufgesteckt werden kann. Die Rohrleitung oder der Schlauch können dabei auch mit dem Kupplungsende verschweißt werden. Das Gehäuse der erfindungsgemäßen Rohrkupplung besteht zweckmäßigerweise aus Kunststoff.

Dass das Rastelement die Aufnahmekammeröffnung der Aufnahmekammer verengt, meint im Rahmen der Erfindung, dass der Innendurchmesser der Aufnahmekammer im Bereich des Rastelementes bzw. an der Stelle, an der das Rastelement vorgesehen ist, geringer ist, als ohne Rastelement. Rastvorsprung des Rohrleitungsendes meint im Rahmen der Erfindung bevorzugt einen ringförmigen Vorsprung, d. h. einen über den Umfang eines Rohrleitungsendes bzw. über den Umfang eines hohlzylinderförmigen Steckerendes umlaufenden Vorsprung, der beispielsweise als umlaufende Wandungsverdickung ausgebildet sein kann. Endgültiger Einsteckzustand meint im Rahmen der Erfindung den Zustand, in dem die Rastverbindung vollständig und korrekt hergestellt ist. In diesem endgültigen Einsteckzustand hinterfasst der Rastvorsprung das Rastelement. Verriegelungselement zur Kontrolle des Einsteckzustandes meint im Rahmen der Erfindung, dass man an der Position bzw. am Zustand des Verriegelungselementes erkennen kann, ob der endgültige Einsteckzustand bzw. die korrekte Rastverbindung erreicht wurde. - Ein in der Aufnahmekammer zu verrastendes Rohrleitungsende bzw. ein in der Aufnahmekammer zu verrastender Stecker besteht nach einer Ausführungsform aus einem faserverstärkten Kunststoffbauteil, das in eine Rohrleitung aus Kunststoff oder in eine Rohrleitung aus Gummi eingepresst ist. Wenn die Rohrleitung aus Metall besteht, kann ein das Rohrleitungsende bildender Stecker aber auch direkt an die Rohrleitung angeformt sein. In diesem Fall handelt es sich bei dem Stecker um kein separates Bauteil, das mit der Rohrleitung verbunden ist, sondern es ist Teil der Rohrleitung.

Es liegt im Rahmen der Erfindung, dass in der Aufnahmekammer zumindest ein in Einsteckrichtung hinter dem Rastelement angeordnetes Dichtelement für die Abdichtung der Verbindung zwischen Rohrkupplung und Rohrleitungsende vorgesehen ist. Bei dem Dichtelement handelt es sich zweckmäßigerweise um einen Dichtungsring, der über den Umfang der Durchgangsbohrung umläuft. Nach Herstellung der Rastverbindung steht die Außenwand des Rohrleitungsendes bzw. die Außenwand des Steckers in unmittelbarem Kontakt mit dem Dichtungselement, vorzugsweise mit dem Dichtungsring.

Nach sehr bevorzugter Ausführungsform, der im Rahmen der Erfindung ganz besondere Bedeutung zukommt, ist das Rastelement zumindest teilweise elastisch ausgebildet. Teilweise elastisch meint, dass das Rastelement zumindest bereichsweise elastisch ausgeführt ist. Zumindest ein Teil des Rastelementes wird dann aufgrund seiner Elastizität von dem Rastvorsprung des Rohrleitungsendes unter Aufweitung der Aufnahmekammeröffnung in den Freiraum gedrückt. Im endgültigen Einsteckzustand ist das Rastelement dann unter Einwirkung elastischer Rückstellkräfte in seinen ursprünglichen Zustand zurückgekehrt. Vorzugsweise besteht das Rastelement aus einem Kunststoff.

Vorzugsweise weist das Rastelement zwei an gegenüberliegenden Seiten der Aufnahmekammer angeordnete Rastarme auf, welche beiden Rastarme jeweils in einen Freiraum eindrückbar sind. Die beiden Rastarme werden also durch den Rastvorsprung des Rohrleitungsendes in zwei Freiräume gedrückt, die an gegenüberliegenden Seiten der Aufnahmekammer angeordnet sind. Zweckmäßigerweise sind beide Rastarme elastisch ausgebildet. Die beiden Rastarme nehmen beim Einstecken das Rohrleitungsende zwischen sich auf. Im endgültigen Einsteckzustand befindet sich der Rastvorsprung hinter den Rastarmen und hinterfasst somit die Rastarme. - Es liegt im Rahmen der Erfindung, dass eine Dichtfunktion für die Rohrkupplung erst gewährleistet ist, wenn die Rastarme des Rastelementes auseinandergedrückt werden.

Nach sehr bevorzugter Ausführungsform der Erfindung ist das Rastelement U-förmig ausgebildet und bilden die beiden U-Schenkel die beiden gegenüberliegenden Rastarme des Rastelementes. Vorzugsweise ist das U-förmige Rastelement von außen in die Aufnahmekammer einschiebbar bzw. einsteckbar. Zweckmäßigerweise sind für dieses Einschieben bzw. Einstecken des U-förmigen Rastelementes zwei Öffnungen für die U-Schenkel bzw. Rastarme in der Aufnahmekammerwandung vorgesehen. Nach einer Ausführungsform der Erfindung bildet die U-Basis des Rastelementes im eingeschobenen Zustand des Rastelementes einen Teil der Aufnahmekammerwandung und bildet die U-Basis dabei zweckmäßigerweise einen Teil der Außenwand dieser Aufnahmekammerwandung. Vorzugsweise schließt die U-Basis des U-förmigen Rastelementes bündig mit der Außenwand der Aufnahmekammer ab. Nach einer Ausführungsform der Erfindung ist die U-Basis des U-förmigen Rastelementes bogenförmig ausgebildet.

Nach bevorzugter Ausführungsform der Erfindung greift das Verriegelungselement in zumindest eine Öffnung der Aufnahmekammerwandung ein und ragt im ersten Einsteckzustand außen aus der Aufnahmekammerwandung heraus. Es liegt dabei im Rahmen der Erfindung, dass ein Teil des Verriegelungselementes in zumindest eine Öffnung eingreift und ein anderer Teil, zweckmäßigerweise der größere Teil des Verriegelungselementes aus der Außenwand der Aufnahmekammer herausragt. Dieses Herausragen des Verriegelungselementes signalisiert den ersten Einsteckzustand. Vorzugsweise steht das Verriegelungselement in diesem ersten Einsteckzustand deutlich sichtbar aus der Außenwand der Aufnahmekammer hervor und ist nicht einschiebbar. Nach Herstellung der Rastverbindung bzw. nach Verwirklichung des zweiten endgültigen Einsteckzustandes ist dann das Verriegelungselement in die zumindest eine Öffnung einschiebbar. Nach diesem Einschieben ist zweckmäßigerweise nur noch ein kleinerer Teil des Verriegelungselementes von außen bzw. an der Außenwand der Aufnahmekammer sichtbar.

Nach sehr bevorzugter Ausführungsform, der im Rahmen der Erfindung ganz besondere Bedeutung zukommt, weist das Verriegelungselement zwei gegenüberliegende Verriegelungsarme auf, welche beiden Verriegelungsarme im zweiten Einsteckzustand des Rohrleitungsendes in zwei gegenüberliegende Freiräume der Aufnahmekammer einschiebbar sind. Die beiden Verriegelungsarme sind zweckmäßigerweise in zwei Öffnungen der Aufnahmekammerwandung vorgesehen und sind durch diese beiden Öffnungen in die Freiräume einschiebbar. Es liegt im Rahmen der Erfindung, dass die beiden Freiräume und die darin enthaltenen Verriegelungsarme ebenso wie die vorzugsweise vorgesehenen beiden Rastarme des Rastelementes an gegenüberliegenden Seiten der Aufnahmekammer angeordnet sind.

Nach sehr bevorzugter Ausführungsform der Erfindung ist das Verriegelungselement U-förmig ausgebildet und bilden die U-Schenkel dieses U-förmigen Verriegelungselementes die beiden gegenüberliegenden Verriegelungsarme. Im ersten Einsteckzustand, in dem zweckmäßigerweise ein größerer Teil des Verriegelungselementes aus der Außenwand der Aufnahmekammer herausragt, steht das bevorzugte U-förmige Verriegelungselement brückenartig aus der Aufnahmekammer hervor und ist nicht einschiebbar. Im zweiten endgültigen Einsteckzustand sind dann die beiden U-Schenkel des U-förmigen Verriegelungselementes durch zwei Öffnungen der Aufnahmekammerwandung in die Freiräume einschiebbar. Danach liegt die U-Basis des U-förmigen Rastelementes zweckmäßigerweise auf der Außenwand der Aufnahmekammer auf. Dadurch wird signalisiert, dass der endgültige Einsteckzustand und somit die korrekte Rastverbindung verwirklicht ist. Für eine deutliche Signalisierung hat das Verriegelungselement zweckmäßigerweise eine andere Farbe als das Gehäuse der Rohrkupplung. Die U-Schenkel des U-förmigen Verriegelungselementes sind zweckmäßigerweise elastisch ausgebildet. Ein erfindungsgemäßes Verriegelungselement besteht vorzugsweise aus Kunststoff.

Das Verriegelungselement verhindert im Rahmen der Erfindung im eingeschobenen Zustand ein Eindrücken des Rastelementes in den zumindest einen Freiraum und verhindert damit ein Lösen der Rastverbindung von Rohrkupplung und Rohrleitungsende. Der eingeschobene Zustand des Verriegelungselementes entspricht dem zweiten endgültigen Einsteckzustand. Ein Lösen der Rastverbindung meint im Rahmen der Erfindung, dass das Rohrleitungsende bzw. der Stecker unter Verschiebung des Rastelementes in den Freiraum aus dem Aufnahmeraum der Rohrkupplung herausziehbar ist.

Der Erfindung liegt zunächst die Erkenntnis zugrunde, dass mit einer erfindungsgemäßen Rohrkupplung eine sehr funktionssichere Rastverbindung zwischen Rohrleitungsende und Aufnahmekammer der Rohrkupplung hergestellt werden kann. Der Erfindung liegt weiterhin die Erkenntnis zugrunde, dass mit einem erfindungsgemäßen Verriegelungselement auf einfache und effektive Weise signalisiert werden kann, dass der endgültige Einsteckzustand des Rohrleitungsendes und somit die korrekte und vollständige Rastverbindung erreicht ist. Zudem liegt der Erfindung die Erkenntnis zugrunde, dass das Verriegelungselement fernerhin dazu verwendet werden kann, ein unbeabsichtigtes Lösen der Rastverbindung von Rohrkupplung und Rohrleitungsende wirksam zu verhindern, indem das Verriegelungselement die Rastarme blockiert. Die erfindungsgemäße Rohrkupplung ist im Übrigen auf einfache und wenig aufwendige Weise herstellbar. Sie zeichnet sich durch wenige einfache Bauelemente aus und weist somit einen einfachen und übersichtlichen Aufbau auf. Trotz der beachtlichen Vorteile, die mit der erfindungsgemäßen Rohrkupplung erreicht werden, ist diese Rohrkupplung nichtsdestoweniger sehr kostengünstig herstellbar. Die erfindungsgemäße Rohrkupplung eignet sich aufgrund der Funktionssicherheit der Rastverbindung insbesondere für eine Verbindung von Rohrleitungen für Kraftstoffe, Bremsflüssigkeiten und ähnliche Flüssigkeiten.

Nachfolgend wird die Erfindung anhand einer lediglich ein Ausführungsbeispiel darstellenden Zeichnung näher erläutert. Es zeigen in schematischer Darstellung:
- Fig. 1: einen Längsschnitt durch eine erfindungsgemäße Rohrkupplung (ohne Rohrleitungsende),
- Fig. 2: den Gegenstand nach Fig. 1 mit Rohrleitungsende bzw. Stecker im ersten Einsteckzustand,
- Fig. 3: den Gegenstand nach Fig. 2 aus Richtung des Pfeiles A,
- Fig. 4: den Gegenstand nach Fig. 1 mit Rohrleitungsende im zweiten Einsteckzustand und
- Fig. 5: den Gegenstand nach Fig. 4 aus Richtung des Pfeiles B.

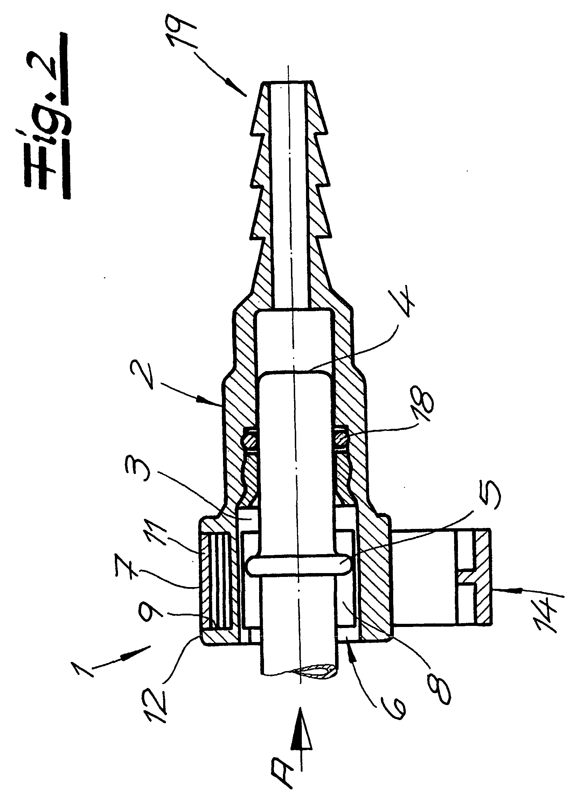

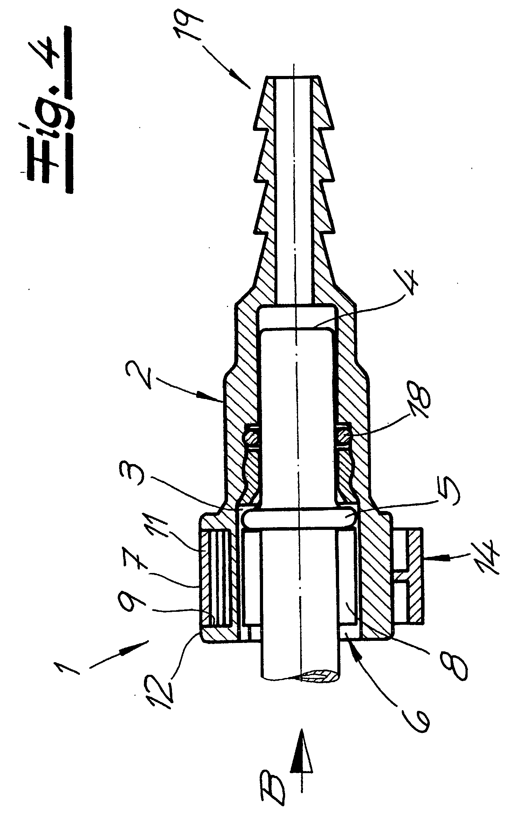

Die Figuren zeigen eine Rohrkupplung 1 für Rohrleitungen mit einem Gehäuse 2, das an zumindest einer Stirnseite eine Aufnahmekammer 3 für die Aufnahme eines als Stecker ausgebildeten Rohrleitungsendes 4 aufweist. Das Rohrleitungsende 4 ist mit einem nach außen vorkragenden Rastvorsprung 5 ausgestattet, der insbesondere in den Fig. 2 und 4 erkennbar ist. Der Rastvorsprung 5 ist im Ausführungsbeispiel als über den Umfang des Rohrleitungsendes 4 umlaufender Vorsprung in Form einer Wandungsverdickung ausgebildet. Das Rohrleitungsende 4 und die nicht weiter dargestellte Rohrleitung mögen im Ausführungsbeispiel aus Metall bestehen. Das Gehäuse 2 der Rohrkupplung 1 besteht im Ausführungsbeispiel aus einem Kunststoff. Auf der der Aufnahmekammer 3 gegenüberliegenden Seite der Rohrkupplung 1 ist ein Kupplungsende 19 vorgesehen, das vorzugsweise und im Ausführungsbeispiel als Tannenbaumprofil ausgebildet ist.

In der Aufnahmekammer 3 ist ein die Aufnahmekammeröffnung 6 verengendes Rastelement 7 vorgesehen. Das Rastelement 7 ist vorzugsweise und im Ausführungsbeispiel U-förmig ausgebildet und die beiden U-Schenkel bilden gegenüberliegende Rastarme 8, die vorzugsweise und im Ausführungsbeispiel elastisch ausgebildet sind. Das Rastelement 7 ist mit seinen beiden Rastarmen 8 durch zwei Öffnungen 9 in der Aufnahmekammerwandung 10 in die Aufnahmekammer 3 von außen einschiebbar bzw. einsteckbar. Dieser Zustand ist in den Figuren dargestellt. Die U-Basis 11 des Rastelementes 7 bildet dabei einen Teil der Aufnahmekammerwandung 10 bzw. bildet einen Teil der Außenwand 12 der Aufnahmekammerwandung 10. Die U-Basis schließt zweckmäßigerweise und im Ausführungsbeispiel bündig mit der übrigen Außenwand 12 der Aufnahmekammerwandung 10 ab. Diese U-Basis 11 ist vorzugsweise und im Ausführungsbeispiel bogenförmig ausgebildet. Das Rastelement 7 besteht zweckmäßigerweise ebenfalls aus einem Kunststoff.

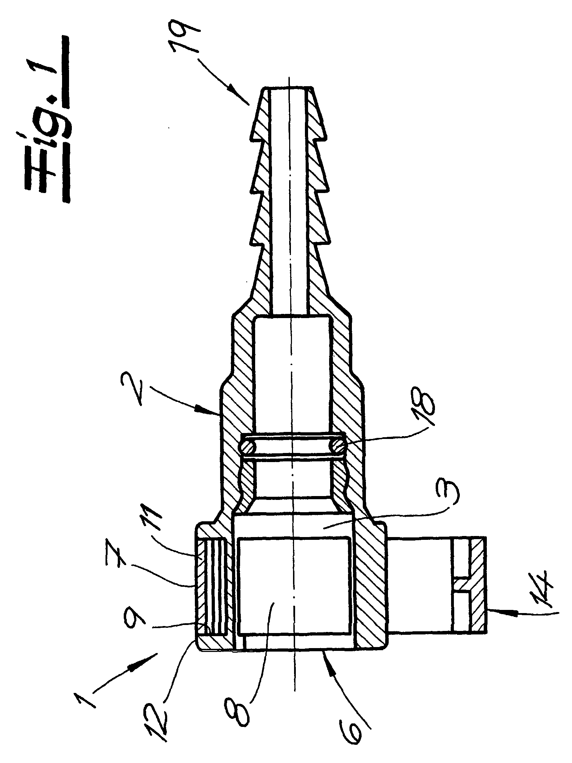

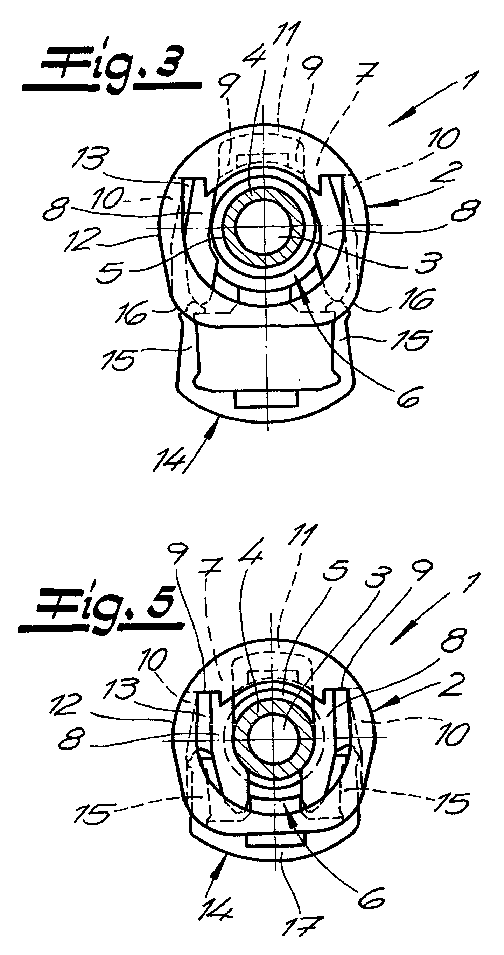

In dem in den Figuren dargestellten eingeschobenen Zustand des Rastelementes 7 sind zwischen den Rastarmen 8 und der Aufnahmekammerwandung 10 zwei Freiräume 13 ausgebildet. Beim Einstecken des Rohrleitungsendes 4 ist das Rastelement 7 in einen ersten Einsteckzustand überführbar, der in den Fig. 2 und 3 dargestellt ist. In diesem ersten Einsteckzustand sind die Rastarme 8 des Rastelementes 7 von dem Rastvorsprung 5 unter Aufweitung der Aufnahmekammeröffnung 6 in die Freiräume 13 gedrückt worden. Dies ist problemlos möglich, wenn die beiden Rastarme 8 wie im Ausführungsbeispiel elastisch ausgebildet sind. - In den Figuren ist weiterhin ein Verriegelungselement 14 zur Kontrolle des Einsteckzustandes des Rohrleitungsendes 4 vorgesehen. Vorzugsweise und im Ausführungsbeispiel ist das Verriegelungselement 14 U-förmig ausgebildet und die U-Schenkel bilden gegenüberliegende Verriegelungsarme 15. Das Verriegelungselement 14 besteht vorzugsweise und im Ausführungsbeispiel aus Kunststoff und die Verriegelungsarme 15 sind zweckmäßigerweise elastisch ausgeführt. In den Fig. 1 bis 3 fasst das Verriegelungselement 14 lediglich mit den Enden der Verriegelungsarme 15 in zwei Verriegelungsöffnungen 16 in der Aufnahmekammerwandung 10 ein. Das Verriegelungselement 14 befindet sich also außerhalb der Freiräume 13 und ist gleichsam brückenartig über der Aufnahmekammer 3 angeordnet (siehe insbesondere Fig. 3). Im ersten Einsteckzustand des Rohrleitungsendes 4 (Fig. 2 und 3) ist es auch nicht möglich, das Verriegelungselement 14 in die Aufnahmekammer 3 bzw. die Verriegelungsarme 15 in die Freiräume 13 einzudrücken, weil diese Freiräume 13 von den Rastarmen 8 blockiert werden. Somit signalisiert das aus der Aufnahmekammerwandung 10 herausragende Verriegelungselement 14, dass sich die Rohrkupplung 1 noch im ersten Einsteckzustand befindet bzw. dass zumindest der zweite endgültige Einsteckzustand und die Vervollständigung der korrekten Rastverbindung noch nicht erreicht ist.

Das Rastelement 7 kann dann in den zweiten endgültigen Einsteckzustand (Fig. 4 und 5) überführt werden. In diesem zweiten Einsteckzustand hinterfasst der Rastvorsprung 5 das Rastelement 7 bzw. die beiden Rastarme 8 des Rastelementes 7 und die elastischen Rastarme 8 sind unter Einwirkung elastischer Rückstellkräfte und unter Freigabe der Freiräume 13 in den ursprünglichen, die Aufnahmekammeröffnung 6 verengenden Zustand zurückgekehrt. In diesem zweiten endgültigen Einsteckzustand ist es nun möglich, das Verriegelungselement 14 in die Aufnahmekammer 3 einzuschieben, da jetzt die Verriegelungsarme 15 in die Freiräume 13 eindringen können. Der eingeschobene Zustand des Verriegelungselementes 14 ist in den Fig. 4 und 5 dargestellt. Im eingeschobenen Zustand des Verriegelungselementes 14 liegt zweckmäßigerweise die U-Basis 17 des Verriegelungselementes 14 auf der Außenwand 12 der Aufnahmekammer 3 auf.

In den Figuren ist weiterhin ein als Dichtungsring 18 ausgebildetes Dichtelement dargestellt, das in der Aufnahmekammer 3 angeordnet ist und beim Einstecken des Rohrleitungsendes 4 in Dichtkontakt kommt. Der Einfachheit halber ist in den Figuren lediglich ein Dichtelement bzw. lediglich ein Dichtungsring 18 dargestellt. Grundsätzlich kann die Rohrkupplung 1 bzw. kann die Aufnahmekammer 3 auch weitere Dichtungselemente bzw. Dichtungsringe 18 aufweisen.

Im Ausführungsbeispiel ist die Rohrkupplung so ausgebildet, dass das Verriegelungselement 14 im eingeschobenen Zustand (Fig. 4 und 5) ein Eindrücken der Rastarme 8 in die Freiräume 13 verhindert. Die Freiräume 13 werden also gleichsam von den Verriegelungsarmen 15 für die Rastarme 8 blockiert. Damit wird auf effektive Weise ein Lösen der Rastverbindung von Rohrkupplung 1 und Rohrleitungsende 4 verhindert. Die Verbindung kann erst gelöst werden, nachdem das Verriegelungselement 14 in seinen Anfangszustand herausgezogen wird. Dadurch werden die Freiräume 13 freigegeben und ein Druck auf die U-Basis 11 des Rastelementes 7 spreizt die Rastarme 8 in die Freiräume 13. Der freie Raum der Aufnahmekammer 3 wird so vergrößert und das Rohrleitungsende 4 mit dem Rastvorsprung 5 lässt sich dann aus der Aufnahmekammer 3 herausziehen.

## Patentansprüche

1. Rohrkupplung (1) für Rohrleitungen mit einem Gehäuse (2), das an zumindest einer Stirnseite eine Aufnahmekammer (3) für die Aufnahme eines Rohrleitungsendes (4) mit zumindest einem nach außen vorkragenden Rastvorsprung (5) aufweist, wobei
in der Aufnahmekammer (3) zumindest ein die Aufnahmekammeröffnung (6) verengendes Rastelement (7) vorgesehen ist und wobei zwischen Rastelement (7) und Aufnahmekammerwandung (10) zumindest ein Freiraum (13) vorgesehen ist,
das Rastelement (7) beim Einstecken des Rohrleitungsendes (4) in einen ersten Einsteckzustand überführbar ist, in dem das Rastelement (7) von dem Rastvorsprung (5) unter Aufweitung der Aufnahmekammeröffnung (6) in den Freiraum (13) gedrückt ist,
das Rastelement (7) in einen zweiten endgültigen Einsteckzustand überführbar ist, in dem der Rastvorsprung (5) das Rastelement (7) hinterfasst und das Rastelement (7) unter Freigabe des Freiraumes (13) in seinen ursprünglichen, die Aufnahmekammeröffnung (6) verengenden Zustand zurückgekehrt ist,
ein Verriegelungselement (14) zur Kontrolle des Einsteckzustandes in zumindest einer Verriegelungsöffnung (16) der Aufnahmekammerwandung (10) vorgesehen ist und wobei
das Verriegelungselement (14) im ersten Einsteckzustand außerhalb des Freiraumes (13) angeordnet ist,
**dadurch gekennzeichnet,dass**
das Verriegelungselement (14) im zweiten Einsteckzustand in den auf der einen Seite von dem Rastelement (7) und auf der anderen gegenüberliegenden Seite von der Aufnahmekammerwandung (10) begrenzten Freiraum (13) einschiebbar ist, wobei sich das Verriegelungselement (14) gleichzeitig mit dem Rastelement (7) und der Aufnahmekammerwandung (10) in Anlage befindet, so dass ein Verschieben des Rastelementes (7) in den Freiraum (13) aufgrund des den Freiraum (13) blockierenden Verriegelungselementes (14) verhindert wird und damit ein unbeabsichtigtes Lösen der Rastverbindung von Rohrkupplung (1) und Rohrleitungsende (4) verhindert wird.

2. Rohrkupplung nach Anspruch 1, wobei in der Aufnahmekammer (3) zumindest ein in Einsteckrichtung hinter dem Rastelement (7) angeordnetes Dichtungselement für die Abdichtung der Verbindung zwischen Rohrkupplung (1) und Rohrleitungsende (4) vorgesehen ist.

3. Rohrkupplung nach einem der Ansprüche 1 oder 2, wobei das Rastelement (7) zumindest teilweise elastisch ausgebildet ist.

4. Rohrkupplung nach einem der Ansprüche 1 bis 3, wobei das Rastelement (7) zwei an gegenüberliegenden Seiten der Aufnahmekammer (3) angeordnete Rastarme (8) aufweist, welche beiden Rastarme (8) jeweils in einen Freiraum (13) eindrückbar sind.

5. Rohrkupplung nach Anspruch 4, wobei das Rastelement (7) U-förmig ausgebildet ist und die beiden U-Schenkel die beiden gegenüberliegenden Rastarme (8) bilden.

6. Rohrkupplung nach einem der Ansprüche 1 bis 5, wobei das Verriegelungselement (14) in zumindest eine Öffnung der Aufnahmekammerwandung (10) eingreift und im ersten Einsteckzustand außen aus der Aufnahmekammerwandung (10) herausragt.

7. Rohrkupplung nach einem der Ansprüche 1 bis 6, wobei das Verriegelungselement (14) zwei gegenüberliegende Verriegelungsarme (15) aufweist, welche beiden Verriegelungsarme (15) im zweiten Einsteckzustand des Rohrleitungsendes (4) in zwei gegenüberliegende Freiräume (13) der Aufnahmekammer (3) einschiebbar sind.

8. Rohrkupplung nach Anspruch 7, wobei das Verriegelungselement (14) U-förmig ausgebildet ist und die U-Schenkel die beiden gegenüberliegenden Verriegelungsarme (15) bilden.

9. Rohrkupplung nach einem der Ansprüche 1 bis 8, wobei ein auf der der Aufnahmekammer (3) gegenüberliegenden Seite vorgesehenes Kupplungsende (19) ein Dornprofil zum Aufstecken eines Kunststoffrohres oder eines Gummischlauches aufweist.

10. Rohrkupplung nach einem der Ansprüche 1 bis 8, wobei das auf der der Aufnahmekammer (3) gegenüberliegenden Seite vorgesehene Kupplungsende (19) eine sich in Richtung der Aufnahmekammer (3) verengende im Querschnitt kreisförmige Nut aufweist.

## Claims

1. Pipe coupling (1) for pipelines, comprising a housing (2) which at least at one end side has a receiving chamber (3) for receiving a pipeline end (4) with at least one outwardly projecting latching protrusion (5), wherein
at least one latching element (7) which narrows the receiving chamber opening (6) is provided in the receiving chamber (3) and wherein at least one clearance (13) is provided between latching element (7) and receiving chamber wall (10),
the latching element (7), when the pipeline end (4) is inserted, can be moved into a first insertion state in which the latching element (7) is pressed into the clearance (13) by the latching protrusion (5) to expand the receiving chamber opening (6),
the latching element (7) can be moved into a second, end insertion state in which the latching protrusion (5) grips behind the latching element (7) and the latching element (7) is returned to its original state which narrows the receiving chamber opening (6), clearing the clearance (13),
a locking element (14) for controlling the insertion state is provided in at least one locking opening (16) of the receiving chamber wall (10), and wherein
the locking element (14) is arranged outside the clearance (13) in the first insertion state,
**characterized in that**
the locking element (14), in the second insertion state, can be pushed into the clearance (13) which is delimited on one side by the latching element (7) and on the other, opposite side by the receiving chamber wall (10), wherein the locking element (14) at the same time bears against the latching element (7) and the receiving chamber wall (10) so that displacement of the latching element (7) into the clearance (13) is prevented by the locking element (14) blocking the clearance (13) and thus unintentional release of the latching connection of pipe coupling (1) and pipeline end (4) is prevented.

2. Pipe coupling according to Claim 1, wherein at least one sealing element arranged in the receiving chamber (3) behind the latching element (7) in the insertion direction is provided for sealing the join between pipe coupling (1) and pipeline end (4).

3. Pipe coupling according to either of Claims 1 and 2, wherein the latching element (7) is at least partially elastic.

4. Pipe coupling according to any of Claims 1 to 3, wherein the latching element (7) has two latching arms (8) arranged on opposite sides of the receiving chamber (3), which two latching arms (8) can in each case be pushed into a clearance (13).

5. Pipe coupling according to Claim 4, wherein the latching element (7) is U-shaped and the two legs of the U form the two opposite latching arms (8).

6. Pipe coupling according to any of Claims 1 to 5, wherein the locking element (14) engages in at least one opening of the receiving chamber wall (10) and protrudes out of the receiving chamber wall (10) in the first insertion state.

7. Pipe coupling according to any of Claims 1 to 6, wherein the locking element (14) has two opposite locking arms (15), which two locking arms (15) can be pushed into two opposite clearances (13) of the receiving chamber (3) in the second insertion state of the pipeline end (4).

8. Pipe coupling according to Claim 7, wherein the locking element (14) is U-shaped and the legs of the U form the two opposite locking arms (15).

9. Pipe coupling according to any of Claims 1 to 8, wherein a coupling end (19) provided on the side opposite the receiving chamber (3) has a dome profile for attaching a plastic pipe or a rubber hose.

10. Pipe coupling according to any of Claims 1 to 8, wherein the coupling end (19) provided on the side opposite the receiving chamber (3) has a groove which narrows in the direction of the receiving chamber (3), said groove being circular in cross section.

## Revendications

1. Accouplement tubulaire (1) pour tuyauteries, comprenant un corps (2) qui comporte sur au moins un côté frontal un compartiment de réception (3) pour loger une extrémité de tuyauterie (4) avec au moins une saillie d'encliquetage (5) dépassant vers l'extérieur,
- pour lequel au moins un élément d'encliquetage (7) rétrécissant l'ouverture (6) du compartiment de réception est prévu dans le compartiment de réception (3) et au moins un dégagement (13) est prévu entre l'élément d'encliquetage (7) et la paroi (10) du compartiment de réception,
- l'élément d'encliquetage (7) pouvant être transféré lors de l'emmanchement de l'extrémité de tuyauterie (4) dans un premier état d'emmanchement, dans lequel l'élément d'encliquetage (7) est pressé par la saillie d'encliquetage (5) avec élargissement de l'ouverture (6) du compartiment de réception dans le dégagement (13),
- l'élément d'encliquetage (7) pouvant être transféré dans un second état d'emmanchement définitif, dans lequel la saillie d'encliquetage (5) enserre l'élément d'encliquetage (7) et l'élément d'encliquetage (7) retourne, en libérant le dégagement (13), dans son état initial rétrécissant l'ouverture (6) du compartiment de réception,
- un élément de verrouillage (14) pour le contrôle de l'état d'emmanchement étant prévu dans au moins une ouverture de verrouillage (16) de la paroi (10) du compartiment de réception et
- l'élément de verrouillage (14) étant disposé dans le premier état d'emmanchement à l'extérieur du dégagement (13),
**caractérisé en ce que**
- l'élément de verrouillage (14) peut être inséré dans le second état d'emmanchement dans le dégagement (13) limité sur l'un des côtés par l'élément d'encliquetage (7) et sur l'autre côté en vis-à-vis par la paroi (10) du compartiment de réception, l'élément de verrouillage (14) se situant alors simultanément au contact de l'élément d'encliquetage (7) et de la paroi (10) du compartiment de réception de sorte qu'un déplacement de l'élément d'encliquetage (7) dans le dégagement (13) est empêché en raison de l'élément de verrouillage (14) bloquant le dégagement (13) et qu'un déblocage inopportun de l'assemblage à encliquetage de l'accouplement tubulaire (1) et de l'extrémité de tuyauterie (4) est empêché.

2. Accouplement tubulaire suivant la revendication 1, au moins un élément d'étanchéité disposé dans la direction d'emmanchement derrière l'élément d'encliquetage (7) étant prévu dans le compartiment de réception (3) pour l'étanchéité de l'assemblage entre l'accouplement tubulaire (1) et l'extrémité de tuyauterie (4).

3. Accouplement tubulaire suivant l'une des revendications 1 et 2, l'élément d'encliquetage (7) étant, au moins en partie, élastique.

4. Accouplement tubulaire suivant l'une des revendications 1 à 3, l'élément d'encliquetage (7) comportant deux bras d'encliquetage (8) disposés sur des côtés opposés du compartiment de réception (3), les deux bras d'encliquetage (8) pouvant être pressés chacun dans un dégagement (13).

5. Accouplement tubulaire suivant la revendication 4, l'élément d'encliquetage (7) étant configuré en U et les deux branches du U formant les deux bras d'encliquetage (8) en vis-à-vis.

6. Accouplement tubulaire suivant l'une des revendications 1 à 5, l'élément de verrouillage (14) s'engageant dans au moins une ouverture de la paroi (10) du compartiment de réception et dépassant extérieurement, dans le premier état d'emmanchement, de la paroi (10) du compartiment de réception.

7. Accouplement tubulaire suivant l'une des revendications 1 à 6, l'élément de verrouillage (14) comportant deux bras de verrouillage (15) en vis-à-vis qui peuvent être insérés, dans le second état d'emmanchement de l'extrémité de tuyauterie (4), dans deux dégagements opposés (13) du compartiment de réception (3).

8. Accouplement tubulaire suivant la revendication 7, l'élément de verrouillage (14) étant configuré en U et les branches du U formant les deux bras de verrouillage (15) en vis-à-vis.

9. Accouplement tubulaire suivant l'une des revendications 1 à 8, une extrémité d'accouplement (19), prévue sur le côté opposé au compartiment de réception (3), comportant un profil en épine pour l'emmanchement d'un tuyau en matière plastique ou d'un tuyau flexible en caoutchouc.

10. Accouplement tubulaire suivant l'une des revendications 1 à 8, l'extrémité d'accouplement (19) prévue sur le côté opposé au compartiment de réception (3) présentant une gorge de section transversale circulaire se rétrécissant en direction du compartiment de réception (3).
